# EUROPEAN PATENT SPECIFICATION

(11) **EP 2 869 504 B1**
(45) Date of publication and mention of the grant of the patent: **13.06.2018**
(21) Application number: 14185915.7
(22) Date of filing: 23.09.2014
(51) Int. Cl.: H04L 12/70, H04L 12/24, G06Q 30/04, H04L 12/54

(54) **Method of managing resource transmission between two service providers and related computer system**
Verfahren zur Verwaltung der Ressourcenübertragung zwischen zwei Dienstanbietern und entsprechendes Computersystem
Procédé de gestion de transmission de ressources entre deux fournisseurs de services et système informatique associé

(30) Priority: 01.11.2013 TW 102139836
(43) Date of publication of application: 06.05.2015
(73) Proprietor: Synology Incorporated, Taipei 103 (TW)
(72) Inventor: Kao, Shi-Shiuan, Taipei 103 (TW); Huang, Chih-Kuang, 821 Kaohsiung City (TW); Kuo, Jen-Wei, 247 New Taipei City (TW)
(74) Representative: Straus, Alexander

(56) References cited:
- WO-A1-00/62145
- WO-A1-2008/082441

## Description

### Field of the Invention

The present invention is related to a method of managing resource transmission between two service providers and related computer system.

### Background of the Invention

In order to access the resources provided by a specific service provider, the user may open an interface using an electronic device for connecting to the web page of the specific service provider. The interface is arranged to display the resource list of the specific service provider as one or multiple icons. Each icon is representative of a file, a folder or an application program provided by the specific service provider. The user may then select a specific icon on the interface for accessing the corresponding resource

In the prior art, when the user intends to transmit resources between a first service provider and a second service provider, an interface is first opened using an electronic device for connecting to the web page of the first service provider. Next, the interface is used for browsing the resource list of the second service provider, and a resource provided by the second service provider can then be transmitted to the first service provider via the electronic device. However, the prior method does not provide an instinctive operation to access the resource lists of different service providers. The transmission of resources between different service providers using the prior method takes a long time, during which the bandwidth of the electronic device is also occupied.

WO 2008/082441 A1 teaches a digital media device at user premises for receiving a media signal from a media source and for presentation via a television display. The exemplary device also supports bi-directional communications with an application service provider device via user premises data communications network. The provider device, which is independent from the media source, offers an application service from a wide area network via the digital media device and user premises network. The digital media device may form a composite signal from the media signal and application service information, for example, for a composite audio and/or video signal for television type presentation to the user. The digital media device may receive a selection signal based on the presentation, for transmission to the application service provider device or to the media source. The media device also offers a GUI presenting a moveable arrangement of icons for selectively accessing application services.

### Summary of the Invention

The present invention aims at providing a method of managing resource transmission between two service providers and related computer system which can therefore provide direct, efficient and instinctive operation for transmitting resources between different service providers.

This is achieved by a method of managing resource transmission between two service providers according to claim 1 and a computer system for managing resource transmission between two service providers according to claims 11 and 12. The dependent claims pertain to corresponding further developments and improvements.

As will be seen more clearly from the detailed description following here below, the claimed method of managing resource transmission between two service providers includes providing a first interface for managing a first service provider which is configured to provide a specific resource; providing a second interface for managing a second service provider; simultaneously displaying the first interface and the second interface on a screen of an electronic device; displaying an icon which is representative of the specific resource on the first interface; the second interface accessing an attribute of the icon when detecting that the icon has been dragged from the first interface to the second interface; the second interface transmitting the accessed attribute of the icon to the second service provider; the second service provider sending a transmission request to the first service provider when determining that the accessed attribute of the icon matches a format of the second service provider; and transmitting the specific resource from the first service provider to the second service provider.

As will be seen more clearly from the detailed description following below, the claimed computer system for managing resource transmission between two service providers includes a first service provider configured to send a transmission request when determining that an attribute of an icon matches a format of the first service provider; a second service provider configured to provide a specific resource and transmit the specific resource to the first service provider after receiving the transmission request; and an electronic device. The electronic device is configured to provide a first interface for managing the first service provider; provide a second interface for managing the second service provider; simultaneously display the first interface and the second interface on a screen; display the icon representative of the specific resource on the second interface; access the attribute of the icon using the first interface when detecting that the icon has been dragged from the second interface to the first interface; and transmit the accessed attribute of the icon to the first service provider.

### Brief Description of the Drawings

In the following, the invention is further illustrated by way of example, taking reference to the accompanying drawings.
FIG. 1 is a diagram illustrating a computer system for managing resources between two service providers according to the present invention.
FIG. 2 is a flowchart illustrating the operation of the computer system when managing resources between two service providers according to the present invention.

### Detailed Description

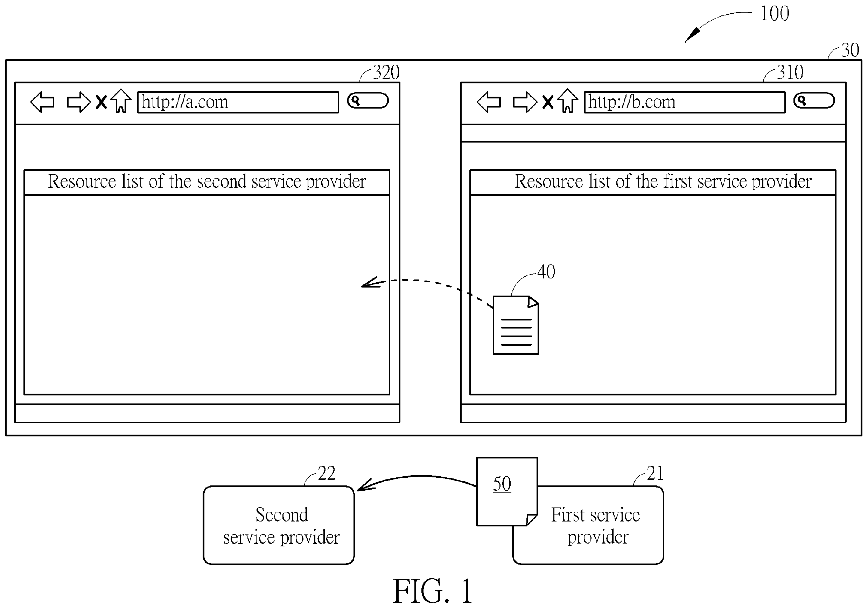

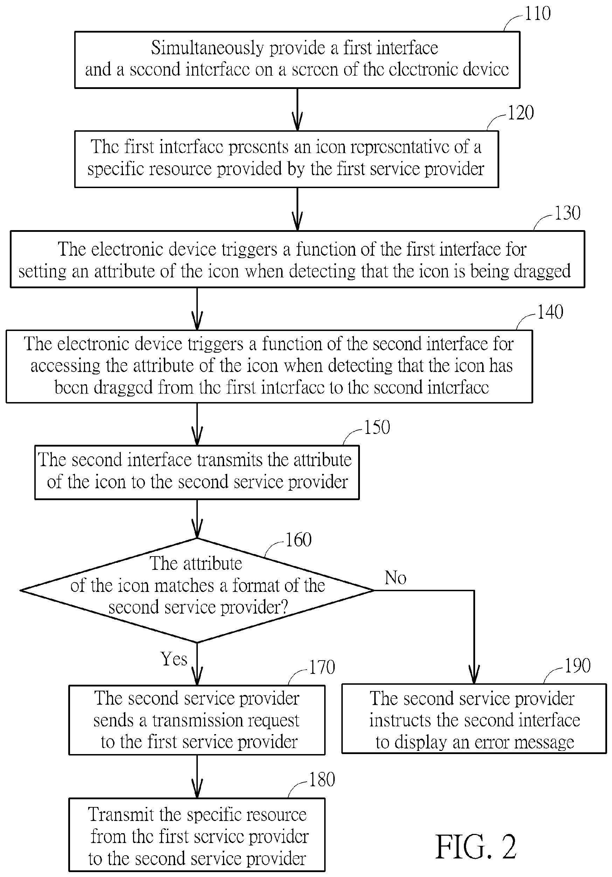

FIG. 1 is a diagram illustrating a computer system 100 for managing resources between two service providers according to the present invention. FIG. 2 is a flowchart illustrating the operation of the computer system 100 when managing resources between two service providers according to the present invention. The computer system 100 includes a first service provider 21, a second service provider 22, and an electronic device 30 configured to execute the following steps depicted in FIG. 2.

| | |
|---|---|
| Step 110: | simultaneously provide a first interface 310 and a second interface 320 on a screen of the electronic device 30; execute step 120. |
| Step 120: | the first interface 310 presents an icon 40 representative of a specific resource 50 provided by the first service provider 21; execute step 130. |
| Step 130: | the electronic device 30 triggers a function of the first interface 310 for setting an attribute of the icon 40 when detecting that the icon 40 is being dragged; execute step 140. |
| Step 140: | the electronic device 30 triggers a function of the second interface 320 for accessing the attribute of the icon 40 when detecting that the icon 40 has been dragged from the first interface 310 to the second interface 320; execute step 150. |
| Step 150: | the second interface 320 transmits the attribute of the icon 40 to the second service provider 22; execute step 160. |
| Step 160: | the second service provider 22 determines whether the attribute of the icon 40 matches a format of the second service provider 22; if yes, execute step |
| | 170; if no, execute step 190. |
| Step 170: | the second service provider 22 sends a transmission request to the first service provider 21; execute step 180. |
| Step 180: | transmit the specific resource 50 from the first service provider 21 to the second service provider 22. |
| Step 190: | the second service provider 22 instructs the second interface 22 to display an error message. |

In the computer system 100 according to the present invention, the first service provider 21 and the second service provider 22 may be servers with different functions, such mail servers, web servers or file servers. The first service provider 21 and the second service provider 22 may also be servers implemented in different structures, such blade servers, rack servers or pedestal servers. The electronic device 30 may be a personal computer, a notebook computer or a mobile device including, but not limited to, a tablet computer, a smartphone or a personal digital assistant (PDA). The screen of the electronic device 30 may adopt a touch panel or another type of screen without touch functions. However, the types and structures of the first service provider 21, the second service provider 22 and the electronic device 30 do not limit the scope of the present invention.

In step 110, the electronic device 30 is configured to simultaneously provide the first interface 310 and the second interface 320 on its screen. The first interface 310 is used for managing the resources provided by first service provider 21, and the second interface 320 is used for managing the resources provided by second service provider 22. For example, the first interface 310 may acquire a resource list from the first service provider 21 using a HyperText Markup Language (HTML) communication protocol and present the resource list as an HTML web page; the second interface 320 may acquire a resource list from the second service provider 22 using the HTML communication protocol and present the resource list as an HTML web page.

In step 120, the first interface 310 is configured to present the icon 40 representative of the specific resource 50 (one or multiple files, folders or application programs) in the resource list of the first service provider 21. Similarly, although not depicted in FIG. 1, the second interface 320 may display a specific icon representative of a specific resource (one or multiple files, folders or application programs) in the resource list of the second service provider 22.

In another embodiment, the first interface 310 and the second interface 320 may acquire the resource lists from the first service provider 21 and the second service provider 21, respectively, using another type of communication protocol. The first interface 310 and the second interface 320 may acquire the resource lists from the first service provider 21 and the second service provider 21, respectively, using the same type of communication protocol or two communication protocols of different types. However, the type of the communication protocol does not limit the scope of the present invention.

In one embodiment, the electronic device 30 may use the same type of browser to simultaneously open the windows of the first interface 310 and the second interface 320. In another embodiment, the electronic device 30 may use two different types of browsers to simultaneously open the windows of the first interface 310 and the second interface 320, respectively. However, the type of the browser used to provide the first interface 310 or the second interface 320 does not limit the scope of the present invention.

When using the electronic device 30, the user may drag the icon 40 using a mouse, a finger or a stylus. In step 130, the electronic device 30 is configured to trigger the function of the first interface 310 for setting the attribute of the icon 40. In an embodiment of the present invention, the attribute of the icon 40 may contain HTML information including, but not limited to, the file name of the specific resource 50, the access path of the specific resource 50, and the website of the first service provider 21, and the electronic device 30 may trigger the setDATA function of the first interface 310 for setting the attribute of the icon 40. Similarly, although not depicted in FIG. 2, the electronic device 30 may trigger the function of the second interface 320 for setting the attribute of a specific icon when detecting that the specific icon is being dragged.

When intending to transmit the specific resource 50 from the first service provider 21 to the second service provider 22, the user may drag the icon 40 from the first interface 320 to the second interface 320 using a mouse, a finger or a stylus, as depicted by the dotted arrow in FIG. 1. In step 140, the electronic device 30 is configured to trigger the function of the second interface 320 for accessing the attribute of the icon 40, thereby acquiring the HTML information of the icon 40 including, but not limited to, the file name of the specific resource 50, the access path of the specific resource 50, and the website of the first service provider 21. In step 150, the second interface 320 may then transmit the attribute of the icon 40 to the second service provider 22. In an embodiment of the present invention, the electronic device 30 may trigger the getDATA function of the second interface 320 for accessing the attribute of the icon 40.

In step 160, if the second service provider 22 determines that the attribute of the icon 40 does not match its format, step 190 is then executed for instructing the second interface 22 to display the error message (not shown in FIG. 1). The error message may be used to notify the user that the specific resource 50 is not allowed to be transmitted between the first service provider 21 and the second service provider 22. If the second service provider 22 determines that the attribute of the icon 40 matches its format, steps 170 and 180 are then executed.

In step 170, the second service provider 22 is configured to send the transmission request to the first service provider 21. In step 180, the first service provider 21 is configured to transmit the specific resource 50 to the second service provider 22 after receiving the transmission request, as depicted by the solid arrow in FIG. 1.

In the present invention, when the user intends to transmit resources between a first service provider and a second service provider, a first interface and a second interface may be simultaneously opened using an electronic device for connecting to the web pages of the first service provider and the second service provider, respectively. The first interface is arranged to display the resource list of the first service provider as icons, and the second interface is arranged to display the resource list of the second service provider as icons. When a specific icon on one of the interfaces is selected and then dragged to the other interface, direct resource transmission between the first and second service providers may be conducted without using the electronic device. Therefore, the present invention can provide direct, efficient and instinctive operation for transmitting resources between different service providers.

## Claims

1. A method of managing resource transmission between two service providers (21, 22) in which a first interface (310) for managing a first service provider (21) and a second interface (320) for managing a second service provider (22) are provided and simultaneously displayed on a screen of an electronic device (30), the first service provider (21) being configured to provide a specific resource (50), the method **characterized in that** it comprises the steps of:
displaying an icon (40) which is representative of the specific resource (50) on the first interface (310);
the second interface accessing an attribute of the icon (40) when detecting that the icon (40) has been dragged from the first interface (310) to the second interface (320);
the second interface (320) transmitting the accessed attribute of the icon (40) to the second service provider (22);
the second service provider (22) sending a transmission request to the first service provider (21) when determining that the accessed attribute of the icon (40) matches a format of the second service provider (22); and
transmitting the specific resource (50) directly from the first service provider (21) to the second service provider (22), wherein:
the first interface (310) is different from the second interface (320); and
the first service provider (21), the second service provider (22) and the electronic device (30) are separate devices.

2. The method of claim 1, **further characterized by** comprising the further steps of:
the first interface (310) acquiring a first resource list from the first service provider (21) using a first communication protocol and presenting the first resource list as a first web page; and
the second interface (320) acquiring a second resource list from the second service provider (22) using a second communication protocol and presenting the second resource list as a second web page.

3. The method of claim 2, **characterized in that** each of the first communication protocol and the second communication protocol is a HyperText Markup Language communication protocol.

4. The method of any of claims 1-3, **further characterized by** comprising the further step of:
triggering a function of the first interface (310) for setting the attribute of the icon (40) when detecting that the icon (40) is being dragged.

5. The method of any of claims 1-3, **further characterized by** comprising the further step of:
triggering a function of the second interface (320) for accessing the attribute of the icon (40) when detecting that the icon (40) is being dragged from the first interface (310) to the second interface (320).

6. The method of any of claims 1-5, **further characterized by** comprising the further step of:
the second service provider (22) instructing the second interface (320) to display an error message for notifying that the specific resource (50) is not allowed to be transmitted between the first service provider (21) and the second service provider (22) when determining that the accessed attribute of the icon (40) does not match the format of the second service provider (22).

7. The method of any of claims 1-6, **characterized in that:**
providing the first interface (310) includes opening the first interface (310) on the electronic device (30) using a first browser; and
providing the second interface (320) includes opening the second interface (320) on the electronic device (30) using a second browser.

8. The method of claim 7, **characterized in that** the first browser and the second browser are of a same type.

9. The method of any of claims 1-8, **characterized in that** the accessed attribute of the icon (40) includes a file name of the specific resource (50), an access path of the specific resource (50), or a website of the first service provider (21).

10. The method of any of claims 1-9, **characterized in that** the specific resource (50) includes one or more files, folders or application programs provided by the first service provider (21).

11. A computer system (100) for managing resource transmission between two service providers (21, 22), the computer system (100) comprising a first service provider (22), a second service provider (21) and an electronic device (30) configured to:
provide a first interface (320) for managing the first service provider (22);
provide a second interface (310) for managing the second service provider (21);
simultaneously display the first interface (320) and the second interface (310) on a screen; and
display an icon (40) representative of a specific resource (50) on the second interface (310);
the computer system (100) **characterized in that**:
the first service provider (22) is configured to send a transmission request when determining that an attribute of the icon (40) matches a format of the first service provider (22);
the second service provider (21) is configured to provide the specific resource (50) and transmit the specific resource (50) directly to the first service provider (22) after receiving the transmission request; and
the electronic device (30) is further configured to:
access the attribute of the icon (40) using the first interface (320) when detecting that the icon (40) has been dragged from the second interface (310) to the first interface (320); and
transmit the accessed attribute of the icon (40) to the first service provider (22), wherein:
the first interface (320) is different from the second interface (310); and
the first service provider (22), the second service provider (21) and the electronic device (30) are separate devices.

12. The computer system (100) of claim 11 for managing resource transmission between two service providers (21, 22), the computer system (100) being configured to execute each step of the method of managing resource transmission between two service providers (21, 22) according to any of claims 2-10.

## Patentansprüche

1. Verfahren zum Managen einer Ressourcen-Übertragung zwischen zwei Service-Providern (21, 22), wobei eine erste Schnittstelle (310) zum Managen eines ersten Service-Providers (21) und eine zweite Schnittstelle (320) zum Managen eines zweiten Service-Providers (22) bereitgestellt und gleichzeitig an einem Bildschirm eines elektronischen Geräts (30) angezeigt werden, worin der erste Service-Provider (21) ausgestaltet ist, eine spezifische Ressource (50) zu liefern, wobei das Verfahren **dadurch gekennzeichnet ist, dass** es die Schritte umfasst:
Anzeigen eines Icons (40), das für die spezifische Ressource (50) an der ersten Schnittstelle (310) darstellend ist;
worin die zweite Schnittstelle auf ein Attribut des Icons (40) zugreift, wenn erfasst wird, dass das Icon (40) von der ersten Schnittstelle (310) zu der zweiten Schnittstelle (320) gezogen wurde;
worin die zweite Schnittstelle (320) das Attribut des Icons (40), auf das zugegriffen wurde zu dem zweiten Service-Provider (22) überträgt;
worin der zweite Service-Provider (22) eine Übertragungs-Anfrage zu dem ersten Service-Provider (21) sendet, wenn bestimmt, wird, dass das Attribut des Icons (40), auf das zugegriffen wurde, mit einem Format des zweiten Service-Providers (22) übereinstimmt; und
Übertragen der spezifischen Ressource (50) direkt von dem ersten Service-Provider (21) zu dem zweiten Service-Provider (22), worin:
die erste Schnittstelle (310) verschieden ist von der zweiten Schnittstelle (320); und
der erste Service-Provider (21), der zweite Service-Provider (22) und das elektronische Gerät (30) getrennte Geräte sind.

2. Verfahren nach Anspruch 1, weiter **dadurch gekennzeichnet, dass** es die weiteren Schritte umfasst:
die erste Schnittstelle (310) erwirbt eine erste Ressourcen-Liste von dem ersten Service-Provider (21) unter Verwendung eines ersten Kommunikationsprotokolls und präsentiert die erste Ressourcenliste als eine erste Web-Page; und
die zweite Schnittstelle (320) erwirbt eine zweite Ressourcen-Liste von dem zweiten Service-Provider (22) unter Verwendung eines zweiten Kommunikationsprotokolls und präsentiert die zweite Ressourcenliste als eine zweite Web-Page.

3. Verfahren nach Anspruch 2, **dadurch gekennzeichnet, dass** jeder des ersten Kommunikations-Protokolls und des zweiten Kommunikations-Protokolls ein HyperText Markup-Sprachen-Kommunikations-Protokoll ist.

4. Verfahren nach einem der Ansprüche 1-3, weiter **gekennzeichnet dadurch, dass** es den weiteren Schritt umfasst:
Auslösen einer Funktion der ersten Schnittstelle (310) zur Einstellung des Attributs des Icons (40), wenn erfasst wird, dass das Icon (40) gezogen wurde.

5. Verfahren nach einem der Ansprüche 1-3, weiter **gekennzeichnet dadurch, dass** es den weiteren Schritt umfasst:
Auslösen einer Funktion der zweiten Schnittstelle (320) um auf das Attribut des Icons (40) zuzugreifen, wenn erfasst, wird, dass das Icon (40) von der ersten Schnittstelle (310) zu der zweiten Schnittstelle (320) gezogen wird.

6. Verfahren nach einem der Ansprüche 1-5, weiter **gekennzeichnet dadurch, dass** es den weiteren Schritt umfasst:
der zweite Service-Provider (22) instruiert die zweite Schnittstelle (320) eine Fehlermeldung anzuzeigen, um anzuzeigen, dass die spezifische Ressource (50) nicht zwischen dem ersten Service-Provider (21) und dem zweiten Service-Provider (22) übertragen werden kann, wenn bestimmt wird, dass das Attribut des Icons (40), auf das zugegriffen wurde, nicht zu dem Format des zweiten Service-Providers (22) passt.

7. Verfahren nach einem der Ansprüche 1-6, **dadurch gekennzeichnet, dass**:
Bereitstellen der ersten Schnittstelle (310) umfasst, Öffnen der ersten Schnittstelle (310) an dem elektronischen Gerät (30) unter Verwendung eines ersten Browsers; und
Bereitstellen der zweiten Schnittstelle (320) umfasst, Öffnen der zweiten Schnittstelle (320) an dem elektronischen Gerät (30) unter Verwendung eines zweiten Browsers.

8. Verfahren nach Anspruch 7, **dadurch gekennzeichnet, dass** der erste Browser und der zweite Browser vom gleichen Typ sind.

9. Verfahren nach einem der Ansprüche 1-8, **dadurch gekennzeichnet, dass** das Attribut des Icons (40), auf das zugegriffen wurde einen File-Namen der spezifischen Ressource (50), einen Zugangspfad der spezifischen Ressource (50), oder ein Webseite des ersten Service-Provider (21) umfasst.

10. Verfahren nach einem der Ansprüche 1-9, **dadurch gekennzeichnet, dass** die spezifische Ressource (50) ein oder mehrere Files, Ordner oder Anwendungsprogramme beinhaltet, die vom ersten Service-Provider (21) bereit gestellt werden.

11. Computersystem (100) zum Managen einer Ressourcen-Übertragung zwischen zwei Service-Providern (21, 22), worin das Computersystem (100) einen ersten Service-Provider (22), einen zweiten Service-Provider (21) und ein elektronisches Gerät (30) umfasst, das ausgestaltet ist:
eine erste Schnittstelle (320) zu liefern, um den ersten Service-Provider (22) zu managen;
eine zweite Schnittstelle (310) zu liefern, um den zweiten Service-Provider (21) zu managen;
gleichzeitig die erste Schnittstelle (320) und die zweite Schnittstelle (310) auf einem Display anzuzeigen; und
ein Icon (40) anzuzeigen, das repräsentativ für eine spezifische Ressource (50) an der zweiten Schnittstelle (310) ist;
worin das Computersystem (100) **dadurch gekennzeichnet ist, dass**:
der erste Service-Provider (22) ausgestaltet ist, eine Übertragungs-Anfrage zu senden, wenn bestimmt wird, dass ein Attribut des Icons (40) zu einem Format des ersten Service-Providers (22) passt;
der zweite Service-Provider (21) ausgestaltet ist, die spezifische Ressource (50) bereitzustellen und die spezifische Ressource (50) direkt zu dem ersten Service-Provider (22) nach Empfang der Übertragungs-Anfrage zu übertragen; und
das elektronische Gerät (30) weiter ausgestaltet ist:
um auf das Attribut des Icons (40) unter Verwendung der ersten Schnittstelle (320) zuzugreifen, wenn erfasst wird, dass das Icon (40) von der zweiten Schnittstelle (310) zu der Schnittstelle (320) gezogen wurde; und
das Attribut des Icons (40), auf das zugegriffen wurde, zu dem ersten Service-Provider (22) zu übertragen, worin:
die erste Schnittstelle (320) verschieden ist von der zweiten Schnittstelle (310); und
der erste Service-Provider (22), der zweite Service-Provider (21) und das elektronische Gerät (30) getrennte Geräte sind.

12. Computersystem (100) zum Managen einer Ressourcen-Übertragung zwischen zwei Service-Providern (21, 22), worin das Computersystem (100) ausgestaltet ist, jeden Schritt des Verfahrens zum Managen der Ressourcen-Übertragung zwischen zwei Service-Providern (21, 22) gemäß einem der Ansprüche 2-10 auszuführen.

## Revendications

1. Procédé de gestion de transmission de ressources entre deux fournisseurs de services (21, 22) dans lequel une première interface (310) pour gérer un premier fournisseur de services (21) et une seconde interface (320) pour gérer un second fournisseur de services (22) sont fournies et simultanément affichées sur un écran d'un dispositif électronique (30), le premier fournisseur de services (21) étant configuré pour fournir une ressource spécifique (50), le procédé étant **caractérisé en ce qu'**il comprend les étapes suivantes :
afficher une icône (40) qui est représentative de la ressource spécifique (50) sur la première interface (310) ;
la seconde interface accède à un attribut de l'icône (40) lorsqu'il est détecté que l'icône (40) a été glissée de la première interface (310) vers la seconde interface (320) ;
la seconde interface (320) transmet l'attribut accédé de l'icône (40) au second fournisseur de services (22) ;
le second fournisseur de services (22) envoie une demande de transmission au premier fournisseur de services (21) lorsqu'il est déterminé que l'attribut accédé de l'icône (40) correspond à un format du second fournisseur de services (22) ; et
transmettre la ressource spécifique (50) directement du premier fournisseur de services (21) au second fournisseur de services (22),
dans lequel :
la première interface (310) est différente de la seconde interface (320) ; et
le premier fournisseur de services (21), le second fournisseur de services (22) et le dispositif électronique (30) sont des dispositifs distincts.

2. Procédé selon la revendication 1, **caractérisé en outre en ce qu'**il comprend les étapes supplémentaires suivantes :
la première interface (310) acquiert une première liste de ressources provenant du premier fournisseur de services (21) à l'aide d'un premier protocole de communication et présente la première liste de ressources sous la forme d'une première page web ; et
la seconde interface (320) acquiert une seconde liste de ressources provenant du second fournisseur de services (22) à l'aide d'un second protocole de communication et présente la seconde liste de ressources sous la forme d'une seconde page web.

3. Procédé selon la revendication 2, **caractérisé en ce que** chacun du premier protocole de communication et du second protocole de communication est un protocole de communication en langage de balisage hypertexte.

4. Procédé selon l'une quelconque des revendications 1 à 3, **caractérisé en outre en ce qu'**il comprend l'étape supplémentaire suivante :
déclencher une fonction de la première interface (310) pour définir l'attribut de l'icône (40) lorsqu'il est détecté que l'icône (40) est en train d'être glissée.

5. Procédé selon l'une quelconque des revendications 1 à 3, **caractérisé en outre en ce qu'**il comprend l'étape supplémentaire suivante :
déclencher une fonction de la seconde interface (320) pour accéder à l'attribut de l'icône (40) lorsqu'il est détecté que l'icône (40) est en train d'être glissée de la première interface (310) vers la seconde interface (320).

6. Procédé selon l'une quelconque des revendications 1 à 5, **caractérisé en outre en ce qu'**il comprend l'étape supplémentaire suivante :
le second fournisseur de services (22) ordonne à la seconde interface (320) d'afficher un message d'erreur pour signaler que la ressource spécifique (50) n'est pas autorisée à être transmise entre le premier fournisseur de services (21) et le second fournisseur de services (22) lorsqu'il est déterminé que l'attribut accédé de l'icône (40) ne correspond pas au format du second fournisseur de services (22).

7. Procédé selon l'une quelconque des revendications 1 à 6, **caractérisé en ce que** :
la fourniture de la première interface (310) comprend l'ouverture de la première interface (310) sur le dispositif électronique (30) à l'aide d'un premier navigateur ; et
la fourniture de la seconde interface (320) comprend l'ouverture de la seconde interface (320) sur le dispositif électronique (30) à l'aide d'un second navigateur.

8. Procédé selon la revendication 7, **caractérisé en ce que** le premier navigateur et le second navigateur sont du même type.

9. Procédé selon l'une quelconque des revendications 1 à 8, **caractérisé en ce que** l'attribut accédé de l'icône (40) comprend un nom de fichier de la ressource spécifique (50), un chemin d'accès de la ressource spécifique (50), ou un site web du premier fournisseur de services (21).

10. Procédé selon l'une quelconque des revendications 1 à 9, **caractérisé en ce que** la ressource spécifique (50) comprend un ou plusieurs fichiers, dossiers ou programmes d'application fournis par le premier fournisseur de services (21).

11. Système informatique (100) de gestion de transmission de ressources entre deux fournisseurs de services (21, 22), le système informatique (100) comprenant un premier fournisseur de services (22), un second fournisseur de services (21) et un dispositif électronique (30) configurés pour :
fournir une première interface (320) pour gérer le premier fournisseur de services (22) ;
fournir une seconde interface (310) pour gérer le second fournisseur de services (21) ;
afficher simultanément la première interface (320) et la seconde interface (310) sur un écran ; et
afficher une icône (40) représentative d'une ressource spécifique (50) sur la seconde interface (310) ;
le système informatique (100) étant **caractérisé en ce que** :
le premier fournisseur de services (22) est configuré pour envoyer une demande de transmission lorsqu'il est déterminé qu'un attribut de l'icône (40) correspond à un format du premier fournisseur de services (22) ;
le second fournisseur de services (21) est configuré pour fournir la ressource spécifique (50) et transmettre la ressource spécifique (50) directement au premier fournisseur de services (22) après réception de la demande de transmission ; et
le dispositif électronique (30) est en outre configuré pour :
accéder à l'attribut de l'icône (40) à l'aide de la première interface (320) lorsqu'il est détecté que l'icône (40) a été glissée de la seconde interface (310) vers la première interface (320) ; et
transmettre l'attribut accédé de l'icône (40) au premier fournisseur de services (22), dans lequel :
la première interface (320) est différente de la seconde interface (310) ; et
le premier fournisseur de services (22), le second fournisseur de services (21) et le dispositif électronique (30) sont des dispositifs distincts.

12. Système informatique (100) selon la revendication 11 de gestion de transmission de ressources entre deux fournisseurs de services (21, 22), le système informatique (100) étant configuré pour exécuter chaque étape du procédé de gestion de transmission de ressources entre deux fournisseurs de services (21, 22) défini selon l'une quelconque des revendications 2 à 10.
